(19)

**Europäisches Patentamt**
**European Patent Office**
**Office européen des brevets**

(11) **EP 3 425 508 B1**

(12) **EUROPEAN PATENT SPECIFICATION**

(45) Date of publication and mention
of the grant of the patent:
**07.07.2021 Bulletin 2021/27**

(51) Int Cl.:
***G06F 11/30*** *(2006.01)*  ***H04L 29/08*** *(2006.01)*
***G06F 11/07*** *(2006.01)*

(21) Application number: **17759128.6**

(86) International application number:
**PCT/CN2017/073916**

(22) Date of filing: **17.02.2017**

(87) International publication number:
**WO 2017/148277 (08.09.2017 Gazette 2017/36)**

(54) **METHOD AND APPARATUS FOR CHECKING INTEGRITY OF DISTRIBUTED SERVICE PROCESSING**

VERFAHREN UND VORRICHTUNG ZUR PRÜFUNG DER INTEGRITÄT VON VERTEILTER DIENSTVERARBEITUNG

PROCÉDÉ ET APPAREIL POUR VÉRIFIER L'INTÉGRITÉ D'UN TRAITEMENT DE SERVICE DISTRIBUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.02.2016 CN 201610113586**

(43) Date of publication of application:
**09.01.2019 Bulletin 2019/02**

(73) Proprietor: **Advanced New Technologies Co., Ltd.**
**George Town, Grand Cayman KY1-9008 (KY)**

(72) Inventor: **DOU, Fangyu**
**Hangzhou, Zhejiang 311121 (CN)**

(74) Representative: **Fish & Richardson P.C.**
**Highlight Business Towers**
**Mies-van-der-Rohe-Straße 8**
**80807 München (DE)**

(56) References cited:
**WO-A1-2009/105754**   **CN-A- 101 378 329**
**CN-A- 102 014 169**   **CN-A- 104 636 232**
**CN-A- 105 224 550**   **US-A1- 2006 031 482**

- **MEIKO JENSEN ED - ANONYMOUS: "A Fault Propagation Approach for Highly Distributed Service Compositions", SERVICES COMPUTING, 2008. SCC '08. IEEE INTERNATIONAL CONFERENCE ON, IEEE, PISCATAWAY, NJ, USA, 7 July 2008 (2008-07-07), pages 507-510, XP031291302, ISBN: 978-0-7695-3283-7**
- **"NONVOLATILE WRITE CACHE ERROR CORRECTION", IBM TECHNICAL DISCLOSURE BULLETIN, INTERNATIONAL BUSINESS MACHINES CORP. (THORNWOOD), US, vol. 38, no. 4, 1 April 1995 (1995-04-01), pages 333-340, XP000516173, ISSN: 0018-8689**

Printed by Jouve, 75001 PARIS (FR)

**Description**

The present application claims priority to Chinese Patent Application No. 201610113586.1, filed on February, 29, 2016 and entitled "METHOD AND APPARATUS FOR CHECKING INTEGRITY OF DISTRIBUTED SERVICE PROCESSING".

**TECHNICAL FIELD**

The present application relates to the field of distributed service technologies, and in particular, to a method and an apparatus for checking integrity of distributed service processing.

**BACKGROUND**

A distributed service system can flexibly and efficiently process services. Through distributed service processing, a conventional system can be split into a series of subsystems that are independent of each other and can be connected based on a relationship between services to complete overall processing of the services in parallel and coordinately. For example, currently, an e-commerce platform (such as the Alipay system), a localized searching service platform (such as 58.com), a membership registration and a marketing system, etc. all can flexibly process various services by using a distributed service system.

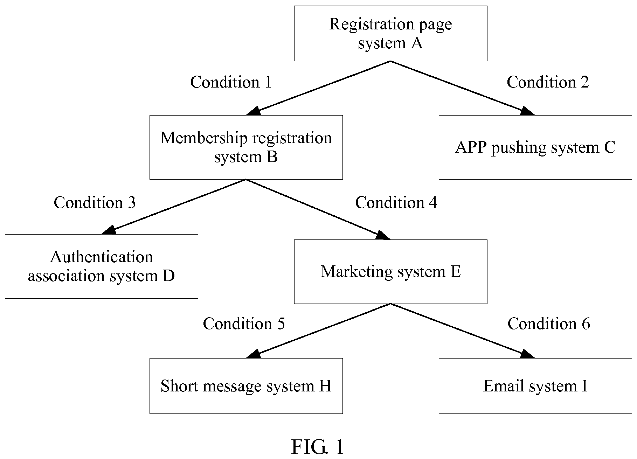

The membership registration and the marketing system are used as an example. Based on various functions related to a membership registration and a marketing service, different service subsystems can be included, such as registration page system A, membership registration system B, APP push system C, authentication association system D, marketing system E, short message system H, and email system I. As shown in FIG. 1, the entire service can be split based on the previous service subsystems, and the following process is performed based on an internal relationship between the services obtained through splitting.

S1: Registration page system A receives a membership registration and a marketing request (assuming that a service serial number of the request is No. 001).

The membership registration and the marketing request can be the request that is sent by a front-end server to registration page system A in the distributed service system after the server receives a registration request sent by a client.

S2: Registration page system A parses the related membership registration data corresponding to the membership registration and the marketing request to perform corresponding service processing. When determining that the related membership registration data corresponding to the membership registration and the marketing request satisfies service condition 1, system A sends the related membership registration data corresponding to the membership registration and the marketing request to membership registration system B corresponding to service condition 1; or if the data satisfies service condition 2, system A sends the data to APP push system C corresponding to service condition 2.

For example, service condition 1 is new registration and service condition 2 is registration by using a mobile phone.

S3: Membership registration system B parses the related membership registration data corresponding to the membership registration and the marketing request to perform corresponding service processing. When determining that the related membership registration data that is corresponding to the membership registration and the marketing request, obtained through parsing, satisfies service condition 3, system B sends the data to authentication association system D; or if the data satisfies service condition 4, system B sends the data to marketing system E.

S4: Authentication association system D performs corresponding service processing based on the received data.

S5: Marketing system E parses the related membership registration data corresponding to the membership registration and the marketing request to perform corresponding service processing. When determining that the related membership registration data that is corresponding to the membership registration and the marketing request, obtained through parsing, satisfies service condition 5, system E sends the data to short message system H; or if the data satisfies service condition 6, system E sends the data to email system I.

S6: Short message system H and email system I separately perform corresponding service processing based on the received data.

Short message system H and email system I separately perform corresponding service processing based on the received data to complete a marketing task.

When a plurality of subsystems coordinately complete one service, factors such as a service constraint (for example, a red envelope does not satisfy a use condition or an account balance is insufficient) and a system fault (for example, a network or a system times out or a database constraint is not satisfied) may result in interruption of a distributed service processing process. The interruption causes inconsistency between data of some executed tasks and other data, and the inconsistency may seriously affect subsequent services. Therefore, to ensure data consistency, the integrity of distributed task processing needs to be checked.

In the existing technology, a method for checking integrity of distributed task processing is to record a service processing result of each service subsystem in a table, as shown in Table 1.

**Table 1**

| Service serial number | Service subsystem performing processing | Processing result |
| --- | --- | --- |
| No. 001 | Subsystem A | Succeed |
| No. 001 | Subsystem B | Succeed |
| No. 001 | Subsystem C | Succeed |
| No. 001 | Subsystem D | Succeed |
| No. 001 | Subsystem E | Succeed |
| No. 001 | Subsystem H | Succeed |
| No. 001 | Subsystem I | Succeed |

In the previous method, a relatively large amount of data is stored. Particularly, for a current large-sized Internet service, one service may trigger tens of subsystems to perform different subservice processing. As such, for one service flow, a table recording tens of pieces of data may be required. The storage amount is relatively large.

Meiko Jensen: "A Fault Propagation Approach for Highly Distributed Service Compositions", Services Computing, 2008. SCC '08. IEEE International Conference On, IEEE, Piscataway, NJ, USA, 7 July 2008, pages 507-510 describes a fault propagation approach for service compositions.

US 2006/031482 describes a method for providing connectivity fault notification in a network. A connectivity fault notification is provided by generating an alarm indication signal at a device that is logically adjacent to the fault. The alarm indication signal is forwarded upward through various levels to at least one client level entity. "Nonvolatile Write Cache Error Correction", IBM Technical Disclosure Bulletin, International Business Machines Corp. (Thornwood), US, vol. 38, no. 4, 1 April 1995, pages 333-34 describes a method of error correction in a Direct Access Storage Device.

## SUMMARY

The invention is defined in the appended independent claims. An objective of implementations of the present application is to provide a method and an apparatus for checking integrity of distributed service processing to reduce an amount of stored data.

To resolve the previous technical problem, the method and the apparatus for checking integrity of distributed service processing provided in the implementations of the present application are implemented as described below.

A method for checking integrity of distributed service processing is provided, where a distributed service system receives a service request and transfers the service request to subsequent service subsystems level by level based on a service condition. A service processing status of each service subsystem in the distributed system is monitored, and the method includes the following:

When an entry service subsystem receives the service request and needs to transfer the service request to a level-1 service subsystem, for each level-1 service subsystem that needs to be transferred, generating a joint identifier of the entry service subsystem and the level-1 service subsystem by the entry service subsystem, and performing exclusive OR processing on the generated joint identifiers to obtain a first check value.

After completing the process, record a joint identifier transferred from an upper-level service subsystem by each common service subsystem. For each lower-level service subsystem that the common service subsystem transfers the service request to, generate a joint identifier of the common service subsystem and the lower-level service subsystem that needs to be transferred. Each common service subsystem performs exclusive OR processing on the recorded joint identifier with the generated joint identifier and the first check value, and updates the first check value.

After completing the process, record a joint identifier transferred from an upper-level service subsystem by each leaf service subsystem, perform exclusive OR processing on the recorded joint identifier and the first check value by each leaf service subsystem, and update the first check value.

An apparatus for checking integrity of distributed service processing is provided, where a distributed service system receives a service request and transfers the service request to subsequent service subsystems level by level based on a service condition. The apparatus includes the following:

A monitoring unit, configured to monitor a service processing status of each service subsystem in the distributed system; a first generation unit, configured to generate a joint identifier of the entry service subsystem and the level-1 service subsystem when an entry service subsystem receives the service request and needs to transfer the service request to a level-1 service subsystem, for each level-1 service subsystem that needs to be transferred.

A first exclusive OR unit, configured to perform exclusive OR processing on the joint identifiers generated by the first generation unit to obtain a first check value; a recording unit, configured to record a joint identifier transferred from an upper-level service subsystem after each service subsystem completes the process; a second generation unit, configured to generate a joint identifier of the common service subsystem and the lower-level service subsystem that needs to be transferred for each lower-level service subsystem that needs to transfer the service request to a common service subsystem needs to transfer the service request; and a second exclusive OR unit, configured to perform exclusive OR processing on the joint identifier recorded by each common service subsystem, the joint identifier generated by each common service subsystem, and the first check value, and update the first check value; moreover, perform exclusive OR processing on a joint identifier recorded by each leaf service subsystem and the first check value, and update the first check value.

A method for checking integrity of distributed service processing is provided; where when transferring a service request to a lower-level service subsystem, any service subsystem in a distributed system generates a joint identifier of the service subsystem and the lower-level service subsystem that needs to be transferred. When completing the process, any service subsystem in the distributed system records a joint identifier transferred from an upper-level service subsystem to the service subsystem; and the method includes the following: by an entry service subsystem, performing exclusive OR processing on a joint identifier generated by the service subsystem to obtain a check value; and by each level of service subsystem other than the entry service subsystem, performing exclusive OR processing on a joint identifier recorded by the service subsystem, a joint identifier generated by the service subsystem, and a check value of an upper-level service subsystem to obtain a final check value.

An apparatus for checking integrity of distributed service processing is provided, including the following: a third generation unit, configured to generate a joint identifier of the service subsystem and the lower-level service subsystem that needs to be transferred when any service subsystem in a distributed system transfers a service request to a lower-level service subsystem; a recording unit, configured to record a joint identifier transferred from an upper-level service subsystem to the service subsystem when any service subsystem in the distributed system completes the process; a third exclusive OR unit, configured to perform exclusive OR processing on a joint identifier generated by an entry service subsystem to obtain a check value; and a fourth exclusive OR unit, configured to perform exclusive OR processing on a joint identifier recorded by each level of service subsystem other than the entry service subsystem, a joint identifier generated by the service subsystem other than the entry service subsystem, and a check value of an upper-level service subsystem to obtain a final check value.

A method for checking integrity of distributed service processing is provided, where when transferring a service request to a lower-level service subsystem, each service subsystem in a distributed system generates a joint identifier of the service subsystem and the lower-level service subsystem that needs to be transferred. When completing the process, each service subsystem in the distributed system records a joint identifier transferred from an upper-level service subsystem; and the method includes the following: performing exclusive OR processing on the joint identifiers recorded by all the service subsystems and the joint identifiers generated by all the service subsystems to obtain a final check value.

An apparatus for checking integrity of distributed service processing is provided, including the following: a fourth generation unit, configured to generate a joint identifier of the service subsystem and the lower-level service subsystem that needs to be transferred when each service subsystem in a distributed system transfers a service request to a lower-level service subsystem; a recording unit, configured to record a joint identifier transferred from an upper-level service subsystem to the service subsystem when any service subsystem in the distributed system completes the process; and a seventh exclusive OR unit, configured to perform exclusive OR processing on the joint identifiers recorded by all the service subsystems and the joint identifiers generated by all the service subsystems to obtain a final check value.

In the implementations of the present application, it can be learned from the technical solutions provided in the implementations of the present application that, unlike the existing technology, there is no need to record each service subsystem by using a very large table. Instead, an exclusive OR operation is performed based on a rule so that a service processing status of the distributed system can be stored by using relatively small space.

**BRIEF DESCRIPTION OF DRAWINGS**

To describe the technical solutions in the implementations of the present application or in the existing technology more clearly, the following briefly describes the accompanying drawings required for describing the implementations or the existing technology. Apparently, the accompanying drawings in the following description merely show some implementations of the present application, and a person of ordinary skill in the art can still derive other drawings from these accompanying drawings without creative efforts.

FIG. 1 is a schematic diagram illustrating a method for checking integrity of distributed service processing in the existing technology;

FIG. 2 is a diagram illustrating an architecture for checking integrity of distributed service processing according to an implementation of the present application; and

FIG. 3 is a flowchart illustrating a method for checking integrity of distributed service processing according to an implementation of the present application.

## DESCRIPTION OF IMPLEMENTATIONS

Implementations of the present application provide a method and an apparatus for checking integrity of distributed service processing.

To enable a person skilled in the art to better understand the technical solutions in the present application, the following clearly and completely describes the technical solutions in the implementations of the present application with reference to the accompanying drawings. Apparently, the described implementations are merely some but not all of the implementations of the present application. All other implementations obtained by a person of ordinary skill in the art based on the implementations of the present application without creative efforts shall fall within the protection scope of the present application.

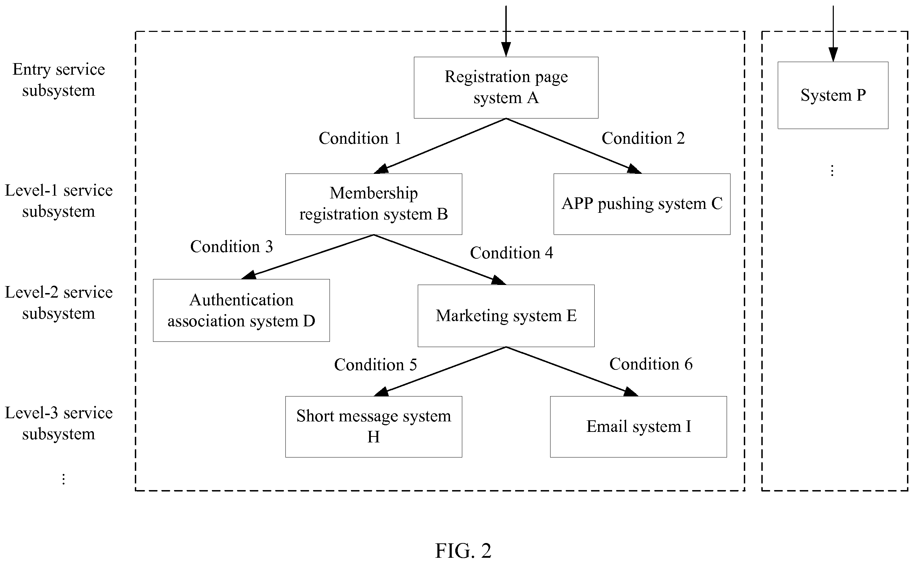

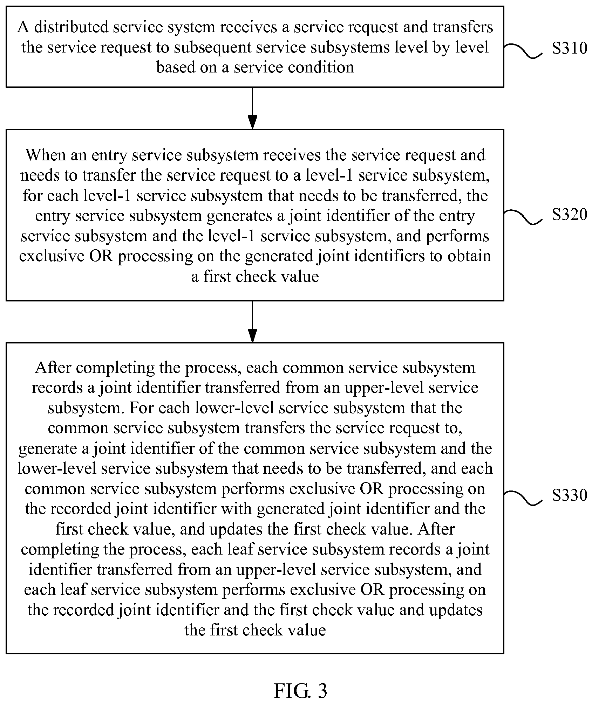

The present application provides an implementation of a method for checking integrity of distributed service processing. The following describes the implementation of the present application in detail with reference to FIG. 2 and FIG. 3. Registration page system A shown in FIG. 2 can be an entry service subsystem. In a distributed system, the entry service subsystem can be connected to a level-1 service subsystem, and there may be one or more level-1 service subsystems that have a service connection to the entry service subsystem. Similarly, the level-1 service subsystem can be connected to a level-2 service subsystem, and there may be one or more level-2 service subsystems that have a service connection to the level-1 service subsystem. Similarly, the level-2 service subsystem can be connected to a level-3 service subsystem, there may be one or more level-3 service subsystems that have a service connection to the level-2 service subsystem, etc. A distributed system shown in FIG. 2 includes an entry service subsystem, a level-1 service subsystem, a level-2 service subsystem, and a level-3 service subsystem. A person skilled in the art knows that different distributed systems may include a same number of service subsystem levels, or more or fewer service subsystem levels. For example, the systems can include five levels of service subsystems. The description here is only an example instead of a limitation.

In the distributed system, the level-1 service subsystem to a level-n service subsystem can be set as a common service subsystem and a leaf service subsystem, other than the entry service subsystem. The common service subsystem can have a service connection to an upper-level service subsystem and have a service connection to a lower-level service subsystem. The leaf service subsystem can have a service connection to only an upper-level service subsystem and have no lower-level service subsystem with the leaf service subsystem service connection.

In FIG. 2, the membership registration system B in the level-1 service subsystem is a common service subsystem, and the APP push system C is a leaf service subsystem; the authentication association system D in the level-2 service subsystem is a leaf service subsystem, and the marketing system E is a common service subsystem; both the short message system H and the email system I in the level-3 service subsystem are leaf service subsystems.

System P in a block represents another distributed system. Generally, a network service provider that provides an integrated service can have a plurality of distributed service systems to process different services.

The present application provides an implementation of a method for checking integrity of distributed service processing. A process can be shown in FIG. 3 and includes the steps below.

S310: A distributed service system receives a service request and transfers the service request to subsequent service subsystems level by level based on a service condition.

For example, as shown in FIG. 2, the distributed service system includes registration page system A, membership registration system B, APP push system C, authentication association system D, marketing system E, short message system H, and email system I. An entire service can be split based on the previous service subsystems, and the following processing is performed based on an internal relationship between services obtained through splitting.

S1: Registration page system A receives a membership registration and a marketing request (assuming that a service serial number of the request is No. 001).

The membership registration and the marketing request can be the request that is sent by a front-end server to registration page system A in the distributed service system after the server receives a registration request sent by a client.

S2: Registration page system A parses the related membership registration data corresponding to the membership registration and the marketing request to perform corresponding service processing. When determining that the related membership registration data corresponding to the membership registration and the marketing request satisfies service condition 1, system A sends the related membership registration data corresponding to the membership registration and the marketing request to membership registration system B corresponding to service condition 1; or if the data satisfies service condition 2, system A sends the data to APP push system C corresponding to service condition 2.

For example, service condition 1 is new registration and service condition 2 is registration by using a mobile phone.

S3: Membership registration system B parses the related membership registration data corresponding to the membership registration and the marketing request to perform corresponding service processing. When determining that the related membership registration data that is corresponding to the membership registration and the marketing request, obtained through parsing, satisfies service condition 3, system B sends the data to authentication association system D; or if the data satisfies service condition 4, system B sends the data to marketing system E.

S4: Authentication association system D performs corresponding service processing based on the received data.

S5: Marketing system E parses the related membership registration data corresponding to the membership registration and the marketing request to perform corresponding service processing. When determining that the related membership registration data that is corresponding to the membership registration and the marketing request, obtained through parsing, satisfies service condition 5, system E sends the data to short message system H; or if the data satisfies service condition 6, system E sends the data to email system I.

S6: Short message system H and email system I separately perform corresponding service processing based on the received data.

Short message system H and email system I separately perform corresponding service processing based on the received data to complete a marketing task.

In the previous process, registration page system A is an entry service subsystem; membership registration system B, APP push system C, and marketing system E are intermediate service subsystems; and authentication association system D, short message system H, and email system I are leaf service subsystems. Membership registration system B and APP push system C are level-1 service subsystems; authentication association system D and marketing system E are level-2 service subsystems; and short message system H and email system I are level-3 service subsystems.

S320: When an entry service subsystem receives the service request and needs to transfer the service request to a level-1 service subsystem, for each level-1 service subsystem that needs to be transferred, the entry service subsystem generates a joint identifier of the entry service subsystem and the level-1 service subsystem, and performs exclusive OR processing on the generated joint identifiers to obtain a first check value.

Here, for ease of understanding, if the distributed service system is an example of membership marketing system, the entry service subsystem is an example of registration page system A, and correspondingly, the service processing request is an example of the membership registration and the marketing request.

In addition, the service request can have a service serial number, for example, No. 001.

After receiving the service request, the entry service subsystem can process the service request and can transfer related data to the level-1 service subsystem based on a predetermined service condition. Here, the level-1 service subsystem is an example of membership registration system B and APP push system C shown in FIG. 2.

For each level-1 service subsystem that needs to be transferred, the joint identifier of the entry service subsystem and each level-1 service subsystem is generated. For example, for membership registration system B, the joint identifier of the entry service subsystem and the level-1 service subsystem can be generated. That is, a joint identifier of registration page system A and membership registration system B is generated, for example, tokenAB. For APP push system C, the joint identifier of the entry service subsystem and the level-1 service subsystem can be generated. That is, a joint identifier of registration page system A and APP push system C is generated, for example, tokenAC.

Exclusive OR processing is performed on the joint identifiers of the entry service subsystem and all the level-1 service subsystems to obtain the first check value.

An exclusive OR processing rule in mathematical calculation is as follows:

$$a \oplus a = 0$$

$$a \oplus 0 = a$$

$$a \oplus (b \oplus c) = (a \oplus b) \oplus c$$

An exclusive OR result of a number and itself is 0, and an exclusive OR operator satisfies the associative law.

For example, the exclusive OR processing is performed on the joint identifier tokenAB generated for membership registration system B and the joint identifier tokenAC generated for APP push system C, and a result is tokenAB⊕tokenAC, where tokenAB⊕tokenAC is the first check value.

It should be noted that if each level-1 service subsystem that needs to be transferred includes only one first-level service subsystem, for example, in the example of FIG. 2, when only condition 1 is satisfied, the level-1 service subsystem that needs to be transferred includes only membership registration system B, only the joint identifier tokenAB of registration page system A and membership registration system B is generated, and the exclusive OR processing is not needed. In the present application, S310 includes the following situation: When each level-1 service subsystem that the service request needs to be transferred to includes only one first-level service subsystem, exclusive OR processing is not needed.

S330: After completing the process, each common service subsystem records a joint identifier transferred from an upper-level service subsystem. For each lower-level service subsystem that the common service subsystem transfers the service request to, generate a joint identifier of the common service subsystem and the lower-level service subsystem that needs to be transferred, and each common service subsystem performs exclusive OR processing on the recorded joint identifier with the generated joint identifier and the first check value, and updates the first check value. After completing the process, each leaf service subsystem records a joint identifier transferred from an upper-level service subsystem, and each leaf service subsystem performs exclusive OR processing on the recorded joint identifier and the first check value and updates the first check value.

After S320, the entry service subsystem can transfer the generated joint identifier to a corresponding level-1 service subsystem. With reference to FIG. 2, registration page system A transfers the generated joint identifier tokenAB to membership registration system B, and transfers the generated joint identifier tokenAC to APP push system C. Correspondingly, the level-1 service subsystem can receive the transferred joint identifier. After completing the process, each level-1 service subsystem can record the joint identifier transferred from the upper-level service subsystem to the level-1 service subsystem. Similarly, after completing the process, a service subsystem at the same level can record the joint identifier transferred from the upper-level service subsystem.

Still with reference to FIG. 2, each level-1 service subsystem records the joint identifier transferred from the upper-level service subsystem. After completing corresponding processing, membership registration system B and APP push system C can respectively record the joint identifier tokenAB and the joint identifier tokenAC that are transferred from the upper-level service subsystem.

For each lower-level subsystem that the common service subsystem transfers the service request to after completing the process, the common service subsystem generates the joint identifier of the common service subsystem and the lower-level service subsystem that needs to be transferred. Each lower-level subsystem that the common service subsystem transfers the service request to after completing the process can be each lower-level subsystem that the level-1 service subsystem needs to transfer, based on a predetermined rule, the service request to after completing the process.

With reference to FIG. 2, for example, membership registration system B is a common service subsystem, and the membership registration system B parses the related membership registration data corresponding to the membership registration and the marketing request to perform corresponding service processing. When determining that the related membership registration data that is corresponding to the membership registration and the marketing request, obtained through parsing, satisfies condition 3, system B sends the data to authentication association system D; or if the data satisfies condition 4, system B sends the data to marketing system E. As such, for authentication association system D, a joint identifier tokenBD of membership registration system B and authentication association system D can be generated; and for marketing system E, a joint identifier tokenBE of membership registration system B and marketing system E can be generated.

Each common service subsystem can perform exclusive OR processing on the recorded joint identifier with the generated joint identifier and the first check value, and update the first check value. For example, after completing corresponding processing, membership registration system B records the joint identifier tokenAB, and membership registration system B further generates the joint identifier tokenBD and the joint identifier tokenBE. Membership registration system B can perform exclusive OR processing on the recorded joint identifier with the generated joint identifier and the first check value. Specifically, the recorded joint identifier is tokenAB, the generated joint identifier is tokenBD and tokenBE, the first check value is tokenAB⊕tokenAC, and a result obtained after exclusive OR processing is performed on the recorded joint identifier with the generated joint identifier and the first check value is tokenAB ⊕ tokenBD ⊕ tokenBE ⊕ tokenAB ⊕ tokenAC = tokenBD ⊕ tokenBE ⊕ tokenAC. The first check value can be updated to the exclusive OR processing result.

In FIG. 2, because APP push system C is a leaf service subsystem, after completing service processing, APP push system C records the joint identifier tokenAC transferred from the upper-level service subsystem. Each leaf service subsystem performs exclusive OR processing on the recorded joint identifier and the first check value, and updates the first check value. Specifically, the joint identifier recorded by APP push system C is tokenAC, and the first check value is tokenBD⊕tokenBE⊕tokenAC. A result obtained after exclusive OR processing is performed on the recorded joint identifier and the first check value is tokenAC⊕tokenBD⊕tokenBE⊕tokenAC=tokenBD⊕tokenBE. The first check value can be updated to the exclusive OR processing result.

For each level of service subsystem that needs to be transferred to, the previous processing can be repeated, until all service subsystems complete service processing or processing is terminated.

With reference to FIG. 2, after completing corresponding processing, each lower-level service subsystem, such as a level-2 service subsystem, can record a joint identifier transferred from an upper-level service subsystem, that is, record tokenBD received by authentication association system D and tokenBE received by marketing system E.

For the level-2 service subsystems such as the authentication association system D and the marketing system E, the authentication association system D is a leaf service subsystem, and no longer transfers the service request to a lower-level subsystem after completing the process. The marketing system E is a common service subsystem, transfers the service request to a lower-level service subsystem after completing the process, that is, short message system H and email system I, and therefore generates a joint identifier tokenEH and a joint identifier tokenEI. Authentication association system D performs exclusive OR processing on the recorded joint identifier and the first check value, and updates the first check value, which is: tokenBD⊕tokenBD⊕tokenBE=tokenBE. Marketing system E performs exclusive OR processing on the recorded joint identifier with the generated joint identifier and the first check value, and updates the first check value, which is tokenBE ⊕ tokenEH ⊕ tokenEI ⊕ tokenBE = tokenEH ⊕ tokenEI.

For a level-3 service subsystem such as short message system H and email system I, both short message system H and email system I are leaf service subsystems. After completing the process, short message system H can record a joint identifier transferred from an upper-level service subsystem, that is, tokenEH transferred from marketing system E. Short message system H performs exclusive OR processing on the recorded joint identifier with the generated joint identifier and the first check value, and updates the first check value to tokenEH⊕tokenEH⊕tokenEI= tokenEI. After completing the process, email system I can record a joint identifier transferred from the upper-level service subsystem, that is, tokenEI transferred from marketing system E. Email system I performs exclusive OR processing on the recorded joint identifier with the generated joint identifier and the first check value, and updates the first check value to tokenEI⊕tokenEI= 0.

If a distributed service system completes all processing on a service request, a final result is 0 based on the processing method in the previous implementation of the present application. In other words, if the final check value obtained based on the previous method is 0, it indicates that the distributed service system completes all processing on the service request.

Based on the previous processing, assuming that short message system H does not complete processing, an integrity checking apparatus does not record the joint identifier EH transferred from the upper-level service subsystem to short message system H, and based on the previous processing method, a final result is tokenEI⊕tokenEH⊕tokenEI, that is, tokenEH. The result can indicate that the distributed system terminates processing at the short message system H, which may be because the service request is not transferred to service subsystem H or service subsystem H does not complete processing. Existence of the joint identifier tokenEH indicates that service subsystem E has generated at least the joint identifier of service subsystem E and service subsystem H that the service request needs to be transferred to. In other words, the final check value obtained based on the previous method is a joint identifier. If the final result is a joint identifier, a service subsystem corresponding to the last identifier in the joint identifier does not complete service processing, that is, a service subsystem in which the distributed service system terminates processing of the service request.

Similarly, if the final result is two or more joint identifiers, a service subsystem corresponding to the last identifier in each joint identifier that has not completed service processing. For example, if the final result is tokenEH⊕tokenEI, that is, there are two joint identifiers, the last H in the first joint identifier EH indicates that the service subsystem H has not complete service processing, and the last I in the second joint identifier EI indicates that the email system I has not complete service processing.

With reference to FIG. 2, based on the previous processing method, as another example, registration page system A generates AB and AC, and obtains a first check value tokenAB⊕tokenAC.

After completing corresponding processing, membership registration system B records the received tokenAB. After completing corresponding processing, APP push system C records the received tokenAC. Membership registration system B generates tokenBD and tokenBE, transfers the generated tokenBD and tokenBE respectively to authentication association system D and marketing system E, and obtains a second check value tokenAB ⊕ tokenAC ⊕ tokenBD ⊕ tokenBE ⊕ tokenAB ⊕ tokenAC = tokenBD ⊕ tokenBE.

Assuming that authentication association system D completes the process, authentication association system D records the joint identifier tokenBD transferred from the upper-level service subsystem to authentication association system D. Assuming that marketing system E does not complete processing, marketing system E does not record tokenBE. Because marketing system E does not complete processing, marketing system E does not generate tokenEH and tokenEI, and obtains a third check value: tokenBD⊕tokenBD⊕tokenBE=tokenBE.

The previous result indicates that service processing in the distributed service system terminates processing at marketing system E.

After obtaining the processing result BE of the distributed service system, a related system can perform corresponding subsequent service processing, for example, check and remove a fault of marketing system E, or restart service processing of marketing system E.

The previous example shows only a distributed system having one entry service subsystem and three levels of service subsystems, and an actual distributed service system may have dozens or hundreds of service subsystem levels. In the method provided in this implementation of the present application, unlike the existing technology, there is no need to record each service subsystem by using a very large table. Instead, an exclusive OR operation is performed based on a rule so that a service processing status of the distributed system can be stored by using relatively small space.

In addition, there is a synchronous calling processing method in the existing technology. In the existing technology, all calling chains of upper-level service subsystems for lower-level service subsystems shown in FIG. 1 are forcibly changed to synchronous calling. System A returns a service result to an upper level only after system C and system B complete processing. Similarly, system B returns a service result to an upper level only after system E and system D complete processing. Similarly, system E returns a service result to an upper level only after system H and system I complete processing. In this case, when an exception occurs in a certain phase, an upper-level calling system is aware of the exception. However, in the synchronous processing method in the existing technology, if some unimportant services that could have been asynchronously processed are also forcibly synchronously processed, a service processing time of the entire distributed system is prolonged. A time for responding to a client is increased, which degrades user experience, and an overall throughput of the system is affected.

However, in the solutions of the previous implementation of the present application, a service processing status of the distributed system can be checked in a timely manner. Synchronous processing is not needed, so a service processing time is not prolonged, user experience is not affected, and an overall throughput of the system is not affected.

The present application further provides an implementation of an apparatus for checking integrity of distributed service processing, including the following: a monitoring unit, configured to monitor a service processing status of each service subsystem in a distributed system; a first generation unit, configured to generate a joint identifier of the entry service subsystem and the level-1 service subsystem when an entry service subsystem receives a service request and needs to transfer the service request to a level-1 service subsystem, for each level-1 service subsystem that needs to be transferred to; a first exclusive OR unit, configured to perform exclusive OR processing on the joint identifiers generated by the first generation unit to obtain a first check value; a recording unit, configured to record a joint identifier transferred from an upper-level service subsystem after each service subsystem completes the process; a second generation unit, configured to generate a joint identifier of the subsystem and the lower-level subsystem for each lower-level subsystem that the service subsystem needs to transfer the service request to after completing the process; and a second exclusive OR unit, configured to perform exclusive OR processing on the joint identifier recorded by the recording unit, the joint identifier generated by the second generation unit, and a first check value obtained last time to obtain a new check value.

Preferably, the apparatus is disposed inside or outside the distributed system.

Preferably, the service request has a serial number.

Preferably, the joint identifier includes identifiers of combined service subsystems.

Preferably, the recording unit does not record a joint identifier transferred from an upper-level service subsystem to a service subsystem that does not complete processing.

The following describes an implementation of another method for checking integrity of distributed service processing in the present application. In this implementation, when each service subsystem in a distributed system transfers a service request to a lower-level service subsystem, an integrity checking apparatus generates a joint identifier of the service subsystem and the lower-level service subsystem that needs to be transferred; when each service subsystem in the distributed system completes the process, the integrity checking apparatus records a joint identifier transferred from an upper-level service subsystem. The method includes the following: by the integrity checking apparatus, performing exclusive OR processing on a joint identifier generated by an entry service subsystem to obtain a check value; and by the integrity checking apparatus, performing exclusive OR processing on a joint identifier recorded by each level of service subsystem other than the entry service subsystem, a joint identifier generated by the service subsystem other than the entry service subsystem, and a check value of an upper-level service subsystem to obtain a final check value.

Particularly, the last level of service subsystem is usually a leaf service subsystem, and does not generate a joint identifier. In this case, it can be considered that a generated joint identifier is 0, and considering the previous exclusive OR operation, if 0 is used in the exclusive OR operation, an operation result is not affected.

The implementations in this specification are all described progressively. For same or similar parts in the implementations, refer to these implementations mutually. Each implementation focuses on a difference from other implementations. Particularly, a system implementation is similar to a method implementation, and therefore, is described briefly. For related parts, refer to related descriptions in the method implementation.

The following describes an implementation of another apparatus for checking integrity of distributed service processing in the present application, including the following: a third generation unit, configured to generate a joint identifier of the service subsystem and the lower-level service subsystem that needs to be transferred when any service subsystem in a distributed system transfers a service request to a lower-level service subsystem; a recording unit, configured to record a joint identifier transferred from an upper-level service subsystem to the service subsystem when any service subsystem in the distributed system completes the process; a third exclusive OR unit, configured to perform exclusive OR processing on a joint identifier generated by an entry service subsystem to obtain a check value; and a fourth exclusive OR unit, configured to perform exclusive OR processing on a joint identifier recorded by each level of service subsystem other than the entry service subsystem, a joint identifier generated by the service subsystem other than the entry service subsystem, and a check value of an upper-level service subsystem to obtain a final check value.

The following describes an implementation of a method for checking integrity of distributed service processing in the present application. When transferring a service request to a lower-level service subsystem, each service subsystem in a distributed system generates a joint identifier of the service subsystem and the lower-level service subsystem that needs to be transferred. When completing the process, each service subsystem in the distributed system records a joint identifier transferred from an upper-level service subsystem; and the method includes the following: performing exclusive OR processing on the joint identifiers recorded by all the service subsystems and the joint identifiers generated by all the service subsystems to obtain a final check value.

FIG. 2 is still used as an example. In this implementation, exclusive OR processing can be centrally performed on the generated joint identifier and the transferred joint identifier.

For example, for a service request whose serial number is No. 001, an entry service subsystem generates a joint identifier tokenAB and a joint identifier tokenAC that are to be transferred to a lower-level service subsystem; after completing the process, service subsystem B records the joint identifier tokenAB received by service subsystem B. After completing the process, service subsystem C records the joint identifier tokenAC received by service subsystem C; service subsystem B generates a joint identifier tokenBD and a joint identifier tokenBE that are to be transferred to a lower-level service subsystem. After completing the process, service subsystem D records the joint identifier tokenBD received by service subsystem D; after completing the process, service subsystem E records the joint identifier tokenBE received by service subsystem E; service subsystem E generates a joint identifier tokenEH and a joint identifier tokenEI that are to be transferred to a lower-level service subsystem. After completing the process, service subsystem H records the joint identifier tokenEH received by service subsystem H; and after completing the process, service subsystem I records the joint identifier tokenEI received by service subsystem I.

Assuming that each level of service subsystem completes the process, the exclusive OR processing is performed on the joint identifier generated by the entry service subsystem, the joint identifier recorded by each level of service subsystem other than the entry service subsystem, and the joint identifier generated by the service subsystem other than the entry service subsystem, to obtain the following final check result tokenAB $\oplus$ tokenAC $\oplus$ tokenAB $\oplus$ tokenAC $\oplus$ tokenBD $\oplus$ tokenBE $\oplus$ tokenBD $\oplus$ tokenBE $\oplus$ tokenEH $\oplus$ tokenEI $\oplus$ tokenEH $\oplus$ tokenEI = 0.

Similarly, based on the previous processing, assuming that short message system H does not complete processing, an integrity checking apparatus does not record the joint identifier EH transferred from the upper-level service subsystem to short message system H, and based on the previous processing method, the final result is tokenEH. The result can be used to indicate that the distributed system terminates processing at short message system H, that is, the service subsystem H does not complete processing.

The following describes an implementation of an apparatus for checking integrity of distributed service processing in the present application, including the following: a fourth generation unit, configured to generate a joint identifier of the service subsystem and the lower-level service subsystem that needs to be transferred when each service subsystem in a distributed system transfers a service request to a lower-level service subsystem; a recording unit, configured to record a joint identifier transferred from an upper-level service subsystem to the service subsystem when any service subsystem in the distributed system completes the process; and a seventh exclusive OR unit, configured to perform exclusive OR processing on the joint identifiers recorded by all the service subsystems and the joint identifiers generated by all the service subsystems to obtain a final check value.

In the 1990s, whether technology improvement is hardware improvement (for example, improvement of a circuit structure, such as a diode, a transistor, or a switch) or software improvement (improvement of a method procedure) can be obviously distinguished. However, as technologies develop, the current improvement for many method procedures can be considered as a direct improvement of a hardware circuit structure. A designer usually programs an improved method procedure to a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, the programming is mostly implemented by using "logic compiler" software instead of manually making an integrated circuit chip. This is similar to a software compiler used for program development and compiling. However, original code before compiling is also written in a specific programming language, which is referred to as a hardware description language (HDL). There are many HDLs, such as an Advanced Boolean Expression Language (ABEL), an Altera Hardware Description Language (AHDL), Confluence, a Cornell University Programming Language (CUPL), HDCal, a Java Hardware Description Language (JHDL), Lava, Lola, MyHDL, PALASM, and a Ruby Hardware Description Language (RHDL). Currently, a Very-High-Speed Integrated Circuit Hardware Description Language (VHDL) and Verilog are most commonly used. A person skilled in the art should also understand that a hardware circuit that implements a logical method procedure can be readily obtained once the method procedure is logically programmed by using the several described hardware description languages and is programmed into an integrated circuit.

A controller can be implemented in any appropriate manner. For example, the controller can be a microprocessor, a processor, or a computer readable medium, a logic gate, a switch, an application-specific integrated circuit (ASIC), a programmable logic controller, or an embedded microcontroller that stores computer readable program code (for example, software or firmware) that can be executed by the processor (or the microprocessor). Examples of the controller include but are not limited to the following microcontrollers: ARC 625D, Atmel AT91SAM, Microchip PIC18F26K20, or Silicon Labs C8051F320. A memory controller can also be implemented as a part of control logic of the memory. A person skilled in the art also knows that a controller can be implemented in a manner of pure computer readable program code, and the steps in the method can be logically programmed to enable the controller to implement same functions in forms of a logical gate, a switch, an application-specific integrated circuit, a programmable logic controller, an embedded microcontroller, etc. Therefore, the controller can be considered as a hardware component, and an apparatus configured to implement various functions in the controller can also be considered as a structure in a hardware component. Alternatively, an apparatus configured to implement various functions can be considered as a software module that can implement the method or a structure in a hardware component.

The system, apparatus, module, or unit illustrated in the previous implementations can be implemented by using a computer chip or an entity, or can be implemented by using a product having a certain function.

For ease of description, the described apparatus is described by dividing functions into various units. Certainly, when the present application is implemented, the functions of each unit can be implemented in one or more pieces of software and/or hardware.

A person skilled in the art should understand that the implementations of the present disclosure can be provided as a method, a system, or a computer program product. Therefore, the present disclosure can use a form of hardware only implementations, software only implementations, or implementations with a combination of software and hardware. In addition, the present disclosure can use a form of a computer program product implemented on one or more computer-usable storage media (including but not limited to a magnetic disk memory, a compact disc read-only memory (CD-ROM), and an optical memory) that include computer-usable program code.

The present disclosure is described with reference to the flowcharts and/or block diagrams of the method, the device (system), and the computer program product based on the implementations of the present disclosure. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions are executed by the computer or the processor of another programmable data processing device to generate an apparatus for implementing a specified function in one or more procedures in the flowcharts and/or in one or more blocks in the block diagrams.

These computer program instructions can be stored in a computer readable memory that can instruct the computer or another programmable data processing device to work in a particular way, so that the instructions stored in the computer readable memory generate an artifact that includes an instruction apparatus. The instruction apparatus implements a particular function in one or more procedures in the flowcharts and/or in one or more blocks in the block diagrams.

These computer program instructions can be loaded to a computer or another programmable data processing device, so that a series of operations and steps are performed on the computer or another programmable device to generate computer-implemented processing. Therefore, the instructions executed on the computer or another programmable device provide steps for implementing a specified function in one or more procedures in the flowcharts and/or in one or more blocks in the block diagrams.

In a typical configuration, a computing device includes one or more processors (CPU), an input/output interface, a network interface, and a memory.

The memory can include a volatile memory, a random access memory (RAM), and/or a nonvolatile memory, etc. in a computer readable medium, such as a read-only memory (ROM) or a flash memory. The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase change RAM (PRAM), a static RAM (SRAM), a dynamic RAM (DRAM), a RAM of another type, a ROM, an electrically erasable programmable read-only memory (EEPROM), a flash memory or another memory technology, a compact disc read-only memory (CD-ROM), a digital versatile disc (DVD) or another optical storage, a magnetic tape, a magnetic disk storage, another magnetic storage device, or any other non-transmission medium. The computer storage medium can be used to store information that can be accessed by a computing device. As described in the present application, the computer readable medium does not include transitory media, for example, a modulated data signal and a carrier.

It should be further noted that, the term "include", "comprise", or any other variant is intended to cover non-exclusive inclusion, so that a process, a method, a commodity, or a device that includes a series of elements not only includes these elements, but also includes other elements that are not expressly listed, or further includes elements inherent to such a process, method, commodity, or device. An element preceded by "includes a ..." does not, without more constraints, exclude the existence of additional identical elements in the process, method, commodity, or device that includes the element.

A person skilled in the art should understand that the implementations of the present application can be provided as a method, a system, or a computer program product. Therefore, the present application can use a form of hardware only implementations, software only implementations, or implementations with a combination of software and hardware. In addition, the present application can use a form of a computer program product implemented on one or more computer-usable storage media (including but not limited to a magnetic disk memory, a CD-ROM, and an optical memory) that include computer-usable program code.

The present application can be described in common contexts of computer executable instructions executed by a computer, such as a program module. Generally, the program module includes a routine, a program, an object, a component, a data structure, etc. executing a specific task or implementing a specific abstract data type. The present application can also be practiced in distributed computing environments. In these distributed computing environments, tasks are executed by remote processing devices that are connected by using a communications network. In the distributed computing environments, the program module can be located in local and remote computer storage media that include storage devices.

The implementations in the present application are described in a progressive way. For same or similar parts in the implementations, refer to the implementations. Each implementation focuses on a difference from other implementations. Particularly, a system implementation is similar to a method implementation, and therefore, is described briefly. For related parts, refer to related descriptions in the method implementation.

## Claims

1.  A method for checking integrity of distributed service processing, wherein a distributed service system receives (S310) a service request and transfers the service request to subsequent service subsystems level by level based on a service condition, wherein a service processing status of each service subsystem in the distributed system is monitored and the method comprises:

in the event that an entry service subsystem receives the service request and needs to transfer the service request to a level-1 service subsystem (S320),

for each level-1 service subsystem to which the service request needs to be transferred, generating, by the entry service subsystem, a joint identifier of the entry service subsystem and the level-1 service subsystem, and
performing exclusive OR processing on the generated joint identifiers to obtain a first check value;

after completing the distributed service processing corresponding to the service request (S330),

recording, for each common service subsystem, a joint identifier transferred from an upper-level service subsystem to the common service subsystem,
for each lower-level service subsystem to which the common service subsystem transfers the service request, generating a joint identifier of the common service subsystem and the lower-level service subsystem, and,
performing, for each common service subsystem, exclusive OR processing on the recorded joint identifier, the generated joint identifier, and the first check value and updating the first check value;

after completing the distributed service processing corresponding to the service request (S330),

recording, for each leaf service subsystem, a joint identifier transferred from an upper-level service subsystem,

performing, for each leaf service subsystem, exclusive OR processing on the recorded joint identifier and the first check value, and

updating the first check value to obtain a final check value; and

storing a final check value as a service processing status of the distributed system.

2. The method according to claim 1, wherein if the final check value obtained in the method is 0, it indicates that the distributed service system completed all processing on the service request.

3. The method according to claim 1, wherein if the final check value obtained in the method is a joint identifier, it indicates that a service subsystem corresponding to the last identifier in the joint identifier did not complete service processing.

4. The method according to claim 1, wherein a joint identifier transferred from an upper-level service subsystem to a service subsystem that did not complete processing is not recorded.

5. An apparatus for checking integrity of distributed service processing, wherein a distributed service system receives a service request and transfers the service request to subsequent service subsystems level by level based on a service condition, and the apparatus comprises:

a monitoring unit, configured to monitor a service processing status of each service subsystem in the distributed system;

a first generation unit, configured to generate a joint identifier of the entry service subsystem and the level-1 service subsystem when an entry service subsystem receives the service request and needs to transfer the service request to a level-1 service subsystem, for each level-1 service subsystem to which the service request needs to be transferred;

a first exclusive OR unit, configured to perform exclusive OR processing on the joint identifiers generated by the first generation unit to obtain a first check value;

a recording unit, configured to record a joint identifier transferred from an upper-level service subsystem for each service subsystem that completed the process;

a second generation unit, configured to generate, for each lower-level service subsystem that a common service subsystem transfers the service request to, a joint identifier of the common service subsystem and the lower-level service subsystem; and

a second exclusive OR unit, configured to perform, for each common service subsystem, exclusive OR processing on the one or more joint identifiers recorded for the common service subsystem, the one or more joint identifiers generated for the common service subsystem, and the first check value, and update the first check value; and, perform, for each leaf service subsystem, exclusive OR processing on the joint identifier recorded for the leaf service subsystem and the first check value, and update the first check value to obtain a final check value; and

a storing unit configure to store the final check value as a service processing status of the distributed system.

6. The apparatus according to claim 5, wherein the apparatus is disposed inside or outside the distributed system.

7. The apparatus according to claim 5, wherein the service request has a serial number.

8. The apparatus according to claim 5, wherein if a final check value obtained by the apparatus is a joint identifier, it indicates that a service subsystem corresponding to the last identifier in the joint identifier did not complete service processing.

9. The apparatus according to claim 5, wherein the recording unit does not record a joint identifier transferred from an upper-level service subsystem to a service subsystem that did not complete processing.

**Patentansprüche**

1. Verfahren zur Prüfung der Integrität von verteilter Dienstverarbeitung, wobei ein verteiltes Dienstsystem eine Dienstanforderung empfängt (S310) und die Dienstanforderung basierend auf einer Dienstbedingung Ebene für Ebene an nachfolgende Dienstsubsysteme weiterleitet, wobei ein Dienstverarbeitungsstatus jedes Dienstsubsystems im verteilten System überwacht wird, und das Verfahren umfasst:

falls ein Eingangsdienstsubsystem die Dienstanforderung empfängt und die Dienstanforderung an ein Ebene-1-Dienstsubsystem weiterleiten muss (S320),

Erzeugen für jedes Ebene-1-Dienstsubsystem, an welches die Dienstanforderung weitergeleitet werden muss, einer gemeinsamen Kennung des Eingangsdienstsubsystems und des Ebene-1-Dienstsubsystems durch das Eingangsdienstsubsystem, und
Durchführen von Exklusiv-ODER-Verarbeitung an den erzeugten gemeinsamen Kennungen, um einen ersten Prüfwert zu erhalten;

nach Abschluss der verteilten Dienstverarbeitung, die der Dienstanforderung entspricht (S330),

Aufzeichnen einer gemeinsamen Kennung, die von einem Dienstsubsystem einer oberen Ebene an das allgemeine Dienstsubsystem weitergeleitet wird, für jedes allgemeine Dienstsubsystem,
Erzeugen für jedes Dienstsubsystem der unteren Ebene, an welches das allgemeine Dienstsubsystem die Dienstanforderung weiterleitet, einer gemeinsamen Kennung des allgemeinen Dienstsubsystems und des Dienstsubsystems der unteren Ebene und
Durchführen von Exklusiv-ODER-Verarbeitung für jedes allgemeine Dienstsubsystem an der aufgezeichneten gemeinsamen Kennung, der erzeugten gemeinsamen Kennung und dem ersten Prüfwert und Aktualisieren des ersten Prüfwerts,

nach Abschluss der verteilten Dienstverarbeitung, die der Dienstanforderung entspricht (S330),

Aufzeichnen einer gemeinsamen Kennung, die von einem Dienstsubsystem einer oberen Ebene weitergeleitet wird, für jedes Blatt-Dienstsubsystem,
Durchführen von Exklusiv-ODER-Verarbeitung für jedes Blatt-Dienstsubsystem an der aufgezeichneten gemeinsamen Kennung und dem ersten Prüfwert und
Aktualisieren des ersten Prüfwerts, um einen Endprüfwert zu erhalten; und
Speichern eines Endprüfwerts als einen Dienstverarbeitungsstatus des verteilten Systems.

2. Verfahren nach Anspruch 1, wobei, wenn der Endprüfwert, der im Verfahren erhalten wird, 0 ist, dies anzeigt, dass das verteilte Dienstsystem die gesamte Verarbeitung an der Dienstanforderung abgeschlossen hat.

3. Verfahren nach Anspruch 1, wobei, wenn der Endprüfwert, der im Verfahren erhalten wird, ein gemeinsame Kennung ist, dies anzeigt, dass ein Dienstsubsystem, das der letzten Kennung in der gemeinsamen Kennung entspricht, die Dienstverarbeitung nicht abgeschlossen hat.

4. Verfahren nach Anspruch 1, wobei eine gemeinsame Kennung, die von einem Dienstsubsystem einer oberen Stufe an ein Dienstsubsystem weitergeleitet wird, das die Verarbeitung nicht abgeschlossen hat, nicht aufgezeichnet wird.

5. Vorrichtung zum Prüfen der Integrität von verteilter Dienstverarbeitung, wobei ein verteiltes Dienstsystem eine Dienstanforderung empfängt und die Dienstanforderung basierend auf einer Dienstbedingung Ebene für Ebene an nachfolgende Dienstsubsysteme weiterleitet, und die Vorrichtung umfasst:

eine Überwachungseinheit, die zum Überwachen eines Dienstverarbeitungsstatus jedes Dienstsubsystems im verteilten System ausgelegt ist;
eine erste Erzeugungseinheit, die so ausgelegt ist, dass sie, wenn ein Eingangsdienstsubsystem die Dienstanforderung empfängt und die Dienstanforderung an ein Ebene-1-Dienstsubsystem weiterleiten muss, für jedes Ebene-1-Dienstsubsystem, an welches die Dienstanforderung weitergeleitet werden muss, eine gemeinsame Kennung des Eingangsdienstsubsystems und des Ebene-1-Dienstsubsystems erzeugt;
eine erste Exklusiv-ODER-Einheit, die so ausgelegt ist, dass sie Exklusiv-ODER-Verarbeitung an den von der ersten Erzeugungseinheit erzeugten gemeinsamen Kennungen durchführt, um einen ersten Prüfwert zu erhalten;
eine Aufzeichnungseinheit, die so ausgelegt ist, dass sie eine gemeinsame Kennung, die von einem Dienstsubsystem einer oberen Ebene weitergeleitet wird, für jedes Dienstsubsystem aufzeichnet, das den Prozess abgeschlossen hat;

eine zweite Erzeugungseinheit, die so ausgelegt ist, dass sie für jedes Dienstsubsystem der unteren Ebene, an welches das allgemeine Dienstsubsystem die Dienstanforderung weiterleitet, eine gemeinsame Kennung des allgemeinen Dienstsubsystems und des Dienstsubsystems der unteren Ebene erzeugt; und

eine zweite Exklusiv-ODER-Einheit, die so ausgelegt ist, dass sie für jedes allgemeine Dienstsubsystem Exklusiv-ODER-Verarbeitung an der einen oder den mehreren gemeinsamen Kennungen, die für das allgemeine Dienstsubsystem aufgezeichnet werden, der einen oder den mehreren gemeinsamen Kennungen, die für das allgemeine Dienstsubsystem erzeugt werden, und dem ersten Prüfwert durchführt und den ersten Prüfwert aktualisiert; und für jedes Blatt-Dienstsubsystem Exklusiv-ODER-Verarbeitung an der für das Blatt-Dienstsubsystem aufgezeichneten gemeinsamen Kennung und dem ersten Prüfwert durchführt und den ersten Prüfwert aktualisiert, um einen Endprüfwert zu erhalten; und

eine Speichereinheit, die zum Speichern des Endprüfwerts als einen Dienstverarbeitungsstatus des verteilten Systems ausgelegt ist.

6. Vorrichtung nach Anspruch 5, wobei die Vorrichtung innerhalb oder außerhalb des verteilten Systems angeordnet ist.

7. Vorrichtung nach Anspruch 5, wobei die Dienstanforderung eine Seriennummer aufweist.

8. Vorrichtung nach Anspruch 5, wobei, wenn ein Endprüfwert, der durch die Vorrichtung erhalten wird, eine gemeinsame Kennung ist, dies anzeigt, dass ein Dienstsubsystem, das der letzten Kennung in der gemeinsamen Kennung entspricht, die Dienstverarbeitung nicht abgeschlossen hat.

9. Vorrichtung nach Anspruch 5, wobei die Aufzeichnungseinheit eine gemeinsame Kennung, die von einem Dienstsubsystem einer oberen Stufe an ein Dienstsubsystem weitergeleitet wird, das die Verarbeitung nicht abgeschlossen hat, nicht aufzeichnet.


## Revendications

1. Procédé de vérification d'intégrité de traitement de service distribué, un système de service distribué recevant (S310) une demande de service et transférant la demande de service à des sous-systèmes de service subséquents niveau par niveau d'après une condition de service, un état de traitement de service de chaque sous-système de service dans le système distribué étant surveillé et le procédé comportant les étapes consistant à :

dans le cas où un sous-système de service d'entrée reçoit la demande de service et doit transférer la demande de service à un sous-système de service de niveau 1 (S320),

pour chaque sous-système de service de niveau 1 auquel la demande de service doit être transférée, faire générer, par le sous-système de service d'entrée, un identifiant joint du sous-système de service d'entrée et du sous-système de service de niveau 1, et effectuer un traitement de OU exclusif sur les identifiants joints générés pour obtenir une première valeur de contrôle ;

après avoir terminé le traitement de service distribué correspondant à la demande de service (S330),

enregistrer, pour chaque sous-système de service commun, un identifiant joint transféré d'un sous-système de service de niveau supérieur au sous-système de service commun, pour chaque sous-système de service de niveau inférieur auquel le sous-système de service commun transfère la demande de service, générer un identifiant joint du sous-système de service commun et du sous-système de service de niveau inférieur, et effectuer, pour chaque sous-système de service commun, un traitement de OU exclusif sur l'identifiant joint enregistré, l'identifiant joint généré, et la première valeur de contrôle et mettre à jour la première valeur de contrôle ;

après avoir terminé le traitement de service distribué correspondant à la demande de service (S330),

enregistrer, pour chaque sous-système de service feuille, un identifiant joint transféré d'un sous-système de service de niveau supérieur,

effectuer, pour chaque sous-système de service feuille, un traitement de OU exclusif sur l'identifiant joint enregistré et la première valeur de contrôle, et
mettre à jour la première valeur de contrôle pour obtenir une valeur de contrôle finale ; et

stocker une valeur de contrôle finale en tant qu'état de traitement de service du système distribué.

2. Procédé selon la revendication 1, la valeur de contrôle finale obtenue dans le procédé indiquant, si celle-ci est 0, que le système de service distribué a terminé tout le traitement sur la demande de service.

3. Procédé selon la revendication 1, la valeur de contrôle finale obtenue dans le procédé indiquant, si celle-ci est un identifiant joint, qu'un sous-système de service correspondant au dernier identifiant dans l'identifiant joint n'a pas terminé le traitement de service.

4. Procédé selon la revendication 1, un identifiant joint transféré d'un sous-système de service de niveau supérieur à un sous-système de service qui n'a pas terminé le traitement n'étant pas enregistré.

5. Appareil de vérification d'intégrité de traitement de service distribué, un système de service distribué recevant une demande de service et transférant la demande de service à des sous-systèmes de service subséquents niveau par niveau d'après une condition de service, et l'appareil comportant :

une unité de surveillance, configurée pour surveiller un état de traitement de service de chaque sous-système de service dans le système distribué ;
une première unité de génération, configurée pour générer un identifiant joint du sous-système de service d'entrée et du sous-système de service de niveau 1 lorsqu'un sous-système de service d'entrée reçoit la demande de service et doit transférer la demande de service à un sous-système de service de niveau 1, pour chaque sous-système de service de niveau 1 auquel la demande de service doit être transférée ;
une première unité de OU exclusif, configurée pour effectuer un traitement de OU exclusif sur les identifiants joints générés par la première unité de génération pour obtenir une première valeur de contrôle ;
une unité d'enregistrement, configurée pour enregistrer un identifiant joint transféré en provenance d'un sous-système de service de niveau supérieur pour chaque sous-système de service qui a terminé le processus ;
une seconde unité de génération, configurée pour générer, pour chaque sous-système de service de niveau inférieur auquel un sous-système de service commun transfère la demande de service, un identifiant joint du sous-système de service commun et du sous-système de service de niveau inférieur ; et
une seconde unité de OU exclusif, configurée pour effectuer, pour chaque sous-système de service commun, un traitement de OU exclusif sur l'identifiant ou les identifiants joints enregistrés pour le sous-système de service commun, l'identifiant ou les identifiants joints générés pour le sous-système de service commun, et la première valeur de contrôle, et mettre à jour la première valeur de contrôle ; et effectuer, pour chaque sous-système de service feuille, un traitement de OU exclusif sur l'identifiant joint enregistré pour le sous-système de service feuille et la première valeur de contrôle, et mettre à jour la première valeur de contrôle pour obtenir une valeur de contrôle finale ; et
une unité de stockage configuré pour stocker la valeur de contrôle finale en tant qu'état de traitement de service du système distribué.

6. Appareil selon la revendication 5, l'appareil étant disposé à l'intérieur ou à l'extérieur du système distribué.

7. Appareil selon la revendication 5, la demande de service possédant un numéro de série.

8. Appareil selon la revendication 5, une valeur de contrôle finale obtenue par l'appareil indiquant, si celle-ci est un identifiant joint, qu'un sous-système de service correspondant au dernier identifiant dans l'identifiant joint n'a pas terminé le traitement de service.

9. Appareil selon la revendication 5, l'unité d'enregistrement n'enregistrant pas un identifiant joint transféré d'un sous-système de service de niveau supérieur à un sous-système de service qui n'a pas terminé le traitement.

FIG. 1

FIG. 2

A distributed service system receives a service request and transfers the service request to subsequent service subsystems level by level based on a service condition — S310

When an entry service subsystem receives the service request and needs to transfer the service request to a level-1 service subsystem, for each level-1 service subsystem that needs to be transferred, the entry service subsystem generates a joint identifier of the entry service subsystem and the level-1 service subsystem, and performs exclusive OR processing on the generated joint identifiers to obtain a first check value — S320

After completing the process, each common service subsystem records a joint identifier transferred from an upper-level service subsystem. For each lower-level service subsystem that the common service subsystem transfers the service request to, generate a joint identifier of the common service subsystem and the lower-level service subsystem that needs to be transferred, and each common service subsystem performs exclusive OR processing on the recorded joint identifier with generated joint identifier and the first check value, and updates the first check value. After completing the process, each leaf service subsystem records a joint identifier transferred from an upper-level service subsystem, and each leaf service subsystem performs exclusive OR processing on the recorded joint identifier and the first check value and updates the first check value — S330

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610113586

- US 2006031482 A

**Non-patent literature cited in the description**

- **MEIKO JENSEN.** A Fault Propagation Approach for Highly Distributed Service Compositions. *Services Computing,* 2008
- *SCC '08. IEEE International Conference On, IEEE, Piscataway, NJ, USA,* 07 July 2008, 507-510

- Nonvolatile Write Cache Error Correction. IBM Technical Disclosure Bulletin. International Business Machines Corp. (Thornwood), 01 April 1995, vol. 38, 333-34